# EUROPEAN PATENT APPLICATION

(11) **EP 4 507 099 A1**
(43) Date of publication of application: **12.02.2025**
(21) Application number: 22963357.3
(22) Date of filing: 29.12.2022
(51) Int. Cl.: H01M 50/342

(54) **BATTERY CELL, BATTERY, AND ELECTRICAL DEVICE**

(30) Priority: 24.10.2022 CN 202222788640 U
(71) Applicant: Contemporary Amperex Technology Co., Limited, Fujian 352100 (CN)
(72) Inventor: SU, Huasheng, Ningde City, Fujian 352100 (CN); DU, Xianglong, Ningde City, Fujian 352100 (CN); XING, Chengyou, Ningde City, Fujian 352100 (CN); LI, Quankun, Ningde City, Fujian 352100 (CN); WANG, Peng, Ningde City, Fujian 352100 (CN); JIN, Haizu, Ningde City, Fujian 352100 (CN)
(74) Representative: Behr, Wolfgang
(86) International application number: PCT/CN2022/143536
(87) International publication number: WO 2024/087381

(57) **Abstract**

A battery cell, battery, and electrical device are provided, which belong to the field technical of battery. The battery cell includes a housing and an insulator. The housing is provided with a pressure relief area, and the pressure relief area is configured to release pressure inside the battery cell. The insulator wraps around the housing and covers the pressure relief area. The insulator is provided with a weak part, and the weak part is configured to be broken when the pressure relief area opens. The weak part is provided, so that the insulator is easily broken at the position of the weak part, which reduces the influence of the insulator on the pressure relief area and ensures a normal burst pressure of the battery cell, so that the battery cell can release pressure in time, thereby improving the safety of the battery cell.

## Description

### Cross-reference to Related Applications

The present disclosure claims priority to Chinese patent Application No. 2022227886406, filed with the Chinese Patent Office on October 24, 2022, entitled "Battery Cell, Battery, and Electrical Device," the entire contents of which are incorporated herein by reference.

### Technical Field

The present disclosure relates to the technical field of battery, and specifically relates to a battery cell, battery, and electrical device.

### Background Art

With development of new energy technology, batteries are used more and more widely, for example, in cell phone, laptop computer, electric bicycle, electric car, electric airplane, electric boat, electric toy car, electric toy boat, electric toy airplane, and power tool, etc.

As an energy storage element, a battery cell generally outputs electrical energy through a chemical reaction between an electrode assembly and electrolyte. In battery technology, it is necessary to consider a performance of the battery cell, as well as to consider a safety of the battery cell. Therefore, how to improve the safety of the battery cell is an urgent problem to be solved in battery technology.

### Summary

Embodiments of the present disclosure provide a battery cell, battery, and electrical device, which can effectively improve the safety of the battery cell.

In a first aspect, the embodiments of the present disclosure provide a battery cell, which includes a housing and an insulator, wherein the housing is provided with a pressure relief area, wherein the pressure relief area is configured to release pressure inside the battery cell; and the insulator is configured to wrap around the housing and cover the pressure relief area, wherein the insulator is provided with a weak part, and the and the weak part is configured to be broken when the pressure relief area opens.

In the above technical solution, the insulator is provided with the weak part, so that the insulator is easily broken at the position of the weak part, which reduces the influence of the insulator on the pressure relief area and ensures a normal burst pressure of the battery cell, so that the battery cell can release pressure in time, thereby improving the safety of the battery cell.

In some embodiments, the weak part includes a first weak part, wherein the first weak part is arranged around the insulator along a circumference of the housing. During a process of opening the pressure relief area, the first weak part can be cracked along the circumference of the housing, so that the insulator can be broken at a position of the first weak part, so as to reduce the influence of the insulator on the pressure relief area.

In some embodiments, the weak part includes a second weak part, wherein the second weak part extends along an extension direction of the housing, and one first weak part is provided with at least one second weak part correspondingly. The insulator can be cracked not only at the position of the first weak part, but also at the position of the second weak part, so as to further reduce the influence of the insulator on the pressure relief area.

In some embodiments, one first weak part is provided with a plurality of second weak parts correspondingly, wherein the plurality of second weak parts are arranged at intervals along the circumference of the housing, and the housing is provided with a pressure relief area correspondingly between two adjacent second weak parts. In this way, the insulator can be cracked at the position of the plurality of second weak parts during the process of opening the pressure relief area, so that the insulator is more easily broken.

In some embodiments, the weak part includes a third weak part, wherein the third weak part is arranged around the insulator along the circumference of the housing; and the third weak part and the first weak part are arranged at intervals along the extension direction of the housing, wherein the pressure relief area is at least partially located between the third weak part and the first weak part. During the process of the opening pressure relief area, the first weak part and the third weak part can be cracked along the circumference of the housing, so that the insulator can be cracked at the position of the first weak part and the third weak part, so that a part of the insulator between the first weak part and the third weak part is detached from the other part. The part of the insulator between the first weak part and the third weak part is more easily broken during the process of opening the pressure relief area, so as to reduce the influence of the insulator on the pressure relief area.

In some embodiments, the pressure relief area is located entirely between the third weak part and the first weak part along the extension direction of the housing. During the process of opening the pressure relief area, more parts of the pressure relief area can act directly on the part of the insulator located between the first weak part and the third weak part, so that the part of the insulator located between the first weak part and the third weak part is more easily broken.

In some embodiments, the weak part further includes a fourth weak part, wherein the fourth weak part extends along the extension direction of the housing; and the fourth weak part is at least partially located between the third weak part and the first weak part along the extension direction of the housing. In this way, the part of the insulator located between the first weak part and the third weak part can be broken at the position of the fourth weak part, so that the part of the insulator between the first weak part and the third weak part is more easily broken, which further reduces the influence of the insulator on the pressure relief area.

In some embodiments, the fourth weak part is entirely arranged between the third weak part and the first weak part along the extension direction of the housing. After the insulator is cracked at the position of the fourth weak part, the crack can extend the first weak part and the third weak part, so that the insulator is more easily cracked along the first weak part and the third weak part.

In some embodiments, the weak part includes a plurality of fourth weak parts, wherein the plurality of fourth weak parts are arranged at intervals along the circumference of the housing, and the housing is provided with one pressure relief area correspondingly between two adjacent fourth weak parts. In this way, during the opening process of the pressure relief region, with the gradual cracking of the fourth weak part, first weak part, and third weak part, the part of the insulator located between two adjacent fourth weak parts can be detached ultimately. The pressure relief area can open more easily, and can open in larger areas, which improves the timeliness of pressure relief.

In some embodiments, the battery cell further includes an adhesive layer, wherein the adhesive layer connects the insulator and the housing, wherein the insulator is provided with a blank area without the adhesive layer, and the first weak part and the third weak part both are arranged on the blank area. The insulator is connected to the housing by the adhesive layer to ensure that the insulator is not easily detached from the housing during normal use of the battery cell. The first weak part and the third weak part are arranged on the blank area to reduce the influence of the adhesive layer on the first weak part and the third weak part, so that the first weak part and the third weak part are more easily cracked. Additionally, since the blank area is not provided with the adhesive layer, the part of the insulator located between the first weak part and the third weak part is more easily broken during the process of outwards opening the pressure relief area.

In some embodiments, along the extension direction of the housing, a distance between the first weak part and the third weak part is L₁, and a width of the blank area is L₂, satisfying: L₁ ≤ L₂, so that the part of the insulator located between the first weak part and the third weak part is entirely located within the blank area.

In some embodiments, the insulator is provided with an opening area, wherein the weak part is arranged along an edge of the opening area, and the opening area covers at least a part of the pressure relief area. During the process of opening the pressure relief area, the opening area of the insulator can open with the weak part as a boundary, which reduces the influence of the insulator on the pressure relief area and can realize a pressure relief of a larger area.

In some embodiments, the housing is provided with the plurality of pressure relief areas at intervals along the circumference of the housing, and one of the pressure relief areas is provided with one of the opening areas correspondingly. Each of the opening areas can open during the process of opening the corresponding pressure relief area, so that each of the pressure relief areas on the housing can open smoothly.

In some embodiments, the weak part includes a fifth weak part, a sixth weak part, and a seventh weak part connected in sequence, wherein the fifth weak part is arranged opposite to the seventh weak part, and the sixth weak part connects the fifth weak part and the seventh weak part, wherein the fifth weak part, the sixth weak part, and the seventh weak part define the opening area together. In this way, the opening area can open in an outwardly flipped manner after the sixth weak part, the fifth weak part, and the seventh weak part are cracked. The open opening area is not detached from the other parts of the insulator, which reduces the risk of detachment and splashing of the opening area during the process of opening the pressure relief area.

In some embodiments, the battery cell further includes an adhesive layer, and the adhesive layer connects the insulator and the housing. The insulator is connected to the housing by the adhesive layer to ensure that the insulator is not easily detached from the housing during normal use of the battery cell.

In some embodiments, the insulator is provided with a blank area without the adhesive layer, wherein the weak part is arranged on the blank area, and the blank area covers at least a part of the pressure relief area. Since the blank area is not provided with the adhesive layer, the pressure relief area is more easily broken during the process of the outwards opening the pressure relief area.

In some embodiments, the blank area completely covers the pressure relief area. In this way, more parts of the relief area can act directly on the blank area during the process of opening the pressure relief area, so that the blank area is more easily broken.

In some embodiments, the insulator is provided with a broken line, and the weak part is formed by the insulator at the position where the broken line is arranged. After the insulator is provided with the broken line, a localized weakening treatment of the insulator is realized, so that the insulator is more easily broken than other areas at the position where the broken line is arranged, so that the weak part is formed which is more easily broken than other areas. The weak part is formed by arranging the broken line on the insulator. On the one hand, it can ensure that the insulator has sufficient strength at the position where the broken line is arranged during normal use; on the other hand, the insulator can be cracked along the broken line during the process of opening the pressure relief area.

In some embodiments, the broken line includes a plurality of grooves arranged at intervals along its extension trajectory, wherein the grooves are arranged on an outer surface or inner surface of the insulator. In this way, the insulating property of the insulator can be ensured.

In some embodiments, the broken line includes a plurality of through holes arranged at intervals along its extension trajectory, wherein the through holes pass through the outer surface and inner surface of the insulator. In this way, the insulator is more easily cracked along the position of the broken line during the process of opening the pressure relief area.

In some embodiments, the insulator is provided with a linear groove, wherein the weak part is formed by the insulator at the position where the linear groove is provided. The structure of forming the weak part by providing the linear groove on the insulator is simple.

In some embodiments, the housing is provided with a plurality of pressure relief areas, wherein the plurality of pressure relief areas are arranged at intervals along the circumference of the housing. The housing can release pressure by the plurality of pressure relief areas to improve the pressure relief capacity of the housing.

In some embodiments, the housing is provided with a notch groove, wherein the notch groove is arranged along the edge of the pressure relief area. The housing is weaker at the position where the notch groove is arranged. When the internal pressure of the housing reaches a threshold, the pressure relief area will open with the notch groove as the boundary, so as to realize the pressure relief of a larger area and improve the pressure relief efficiency.

In some embodiments, the notch groove includes a first groove section, a second groove section, and a third groove section, wherein the first groove section is arranged opposite to the third groove section; the second groove section connects the first groove section and the third groove section; and the first groove section, the second groove section, and the third groove section together define the pressure relief area. In this way, the pressure relief area can open in an outwards flipped manner after the second groove section, the first groove section, and the third groove section are cracked. The open pressure relief area is not detached from the other parts of the housing, which reduces the risk of detachment and splashing during the process of opening the pressure relief area.

In some embodiments, the housing includes the housing body and the end cover, wherein the housing is provided with the opening, and the end cover closes the openings; and the pressure relief area is formed on the housing, and the insulator wraps around the housing along the circumference of the opening.

In a second aspect, the embodiments of the present disclosure provide a battery, including the battery cell provided by any of the embodiments of the first aspect.

In a third aspect, the embodiments of the present disclosure further provide an electrical device, including the battery provided by any of the embodiments of the second aspect.

### Brief Description of Drawings

In order to more clearly illustrate the technical solutions of the embodiments of the present disclosure, the drawings to be used in the embodiments will be briefly introduced below. It should be understood that the following drawings only show certain embodiments of the present disclosure, and therefore should not be regarded as a limitation of the scope. For persons of ordinary skill in the art, other relevant drawings can be obtained from these drawings without inventive efforts.
FIG. 1 shows a structure schematic diagram of a vehicle provided by some embodiments of the present disclosure;
FIG. 2 shows an explosion diagram of a battery provided by some embodiments of the present disclosure;
FIG. 3 shows an explosion diagram of a battery cell provided by some embodiments of the present disclosure;
FIG. 4 shows a structure schematic diagram of an insulator shown in FIG. 3;
FIG. 5 shows a schematic structure diagram of an insulator provided by some embodiments of the present disclosure;
FIG. 6 shows a structure schematic diagram of an insulator provided by some other embodiments of the present disclosure;
FIG. 7 shows a structure schematic diagram of an insulator provided by some other embodiments of the present disclosure;
FIG. 8 shows an assembly diagram of an insulating layer and a housing provided by some embodiments of the present disclosure;
FIG. 9 is an A-A sectional diagram shown in FIG. 8;
FIG. 10 is a B-B sectional diagram shown in FIG. 8;
FIG. 11 shows an explosion diagram of a battery cell provided by some other embodiments of the present disclosure;
FIG. 12 shows a structure schematic diagram of an insulator shown in FIG. 11;
FIG. 13 shows a structure schematic diagram of a housing body of a housing provided by some embodiments of the present disclosure; and
FIG. 14 shows an explosion diagram of a battery cell provided by some other embodiments of the present disclosure.

Reference numbers: 1-housing; 11-housing body; 111-pressure relief area; 112-notch groove; 1121-first groove section; 1122-second groove section; 1123-third groove section; 12-end cover; 2-electrode assembly; 3-insulator; 31-weak part; 311-firstweak part; 312-second weak part; 313-third weak part; 314-fourth weak part; 315-fifth weak part; 316-sixth weak part; 317-seventh weak part; 32-opening area; 33-blankarea; 4-electrodeterminal; 5-current collecting member; 6-adhesive layer; 10-battery cell; 20-box body; 201-first part; 202-second part; 100-battery; 200-controller; 300-motor; 1000-vehicle .

### Detailed Description of Embodiments

In order to make the purpose, technical solutions and advantages of the embodiments of the present disclosure clearer, the technical solutions in the embodiments of the present disclosure will be clearly described below in conjunction with drawings in the embodiments of the present disclosure. It is obviously that the described embodiments are a part of the embodiments of the present disclosure, and not all the embodiments. Based on the embodiments of the present disclosure, all the other embodiments obtained by those ordinarily skilled in the art without inventive efforts, shall fall within the scope of protection of the present disclosure.

Unless otherwise defined, all technical and scientific terms used in the present disclosure have the same meaning as commonly understood by those skilled in the art belonging to the present disclosure. The terms used in the specification of the present disclosure are used only for the purpose of describing specific embodiments, and are not intended to limit the present disclosure. The terms "include" and "comprise," and any variations thereof in the specification of the present disclosure and claims and the drawings described above, are intended to cover a non-exclusive inclusion. The terms "first", "second", etc., in the specification and claims or the drawings described above of the present disclosure, are used to differentiate different objects, and are not used to describe a particular order or a relationship of priority.

Reference to "embodiment" in the present disclosure means that particular features, structures, or characteristics described in conjunction with the embodiments can be included in the at least one embodiment of the present disclosure. The phrase occurring at various positions of the specification does not necessarily all refer to the same embodiment, nor is it a separate or alternative embodiment that is mutually exclusive with other embodiments.

The term "and/or" in the present disclosure is merely an associated relationship for describing associated objects, which indicates three relationships can exist. For example, A and/or B can indicate three cases: A alone, both A and B, and B alone. Additionally, the character "/" in the present disclosure generally indicates an "or" relationship of the associated objects.

In embodiments of the present disclosure, the same reference numbers indicate the same components. For brevity, the detailed descriptions for the same components in different embodiments are omitted. It should be understood that, the thickness, length and width, and other dimensions of the various components in the embodiments of the present disclosure shown in the drawings, as well as the overall thickness, length, width, and other dimensions of the integrated device are illustrative only, and should not be any limitation of the present disclosure.

The term "plurality" as used in the present disclosure means more than two (including two).

In the present disclosure, the battery cell can include a lithium-ion secondary battery, a lithium-ion primary battery, a lithium-sulfur battery, a sodium-lithium-ion battery, a sodium-ion battery, or a magnesium-ion battery, etc., which is not limited by the embodiments of the present disclosure. The battery cell can be in cylindrical, flat, rectangular, or other shapes, etc., which is not limited by the embodiments of the present disclosure. The battery cells are generally classified into three types according to packaging method: cylindrical battery cell, square battery cell, and soft pack battery cell, which is not limited by the embodiments of the present disclosure.

The battery referred in embodiments of the present disclosure refers to a single physical module including one or more battery cells to provide a higher voltage and capacity. For example, the battery referred in the present disclosure can include a battery module or battery pack, etc. The battery generally includes a box body for packaging one or more battery cells. The box body can prevent liquid or other foreign objects from affecting the charging or discharging of the battery cell.

The battery cell includes electrode assembly and electrolyte, wherein the electrode assembly is consisted of a positive electrode plate, negative electrode plate, and separator. The battery cell works mainly relying on metal ions moving between the positive electrode plate and the negative electrode plate. The positive electrode plate includes a positive electrode collector and a positive electrode active substance layer, wherein the positive electrode active substance layer is coated on a surface of the positive electrode collector. The positive electrode collector not coated with the positive electrode active substance layer protrudes out of the positive electrode collector coated with the positive electrode active substance layer, and the positive electrode collector not coated with the positive electrode active substance layer is configured as a positive tab. Taking the lithium-ion battery as an example, materials of the positive electrode collector can be aluminum, and the positive electrode active substance can be lithium cobaltate, lithium iron phosphate, ternary lithium, or lithium manganate, etc. The negative electrode plate includes a negative electrode collector and a negative electrode active substance layer, wherein the negative electrode active substance layer is coated on a surface of the negative electrode collector. The negative electrode collector not coated with the negative electrode active substance layer protrudes out of the negative electrode collector coated with the negative electrode active substance layer, and the negative electrode collector not coated with the negative electrode active substance layer is configured as a negative tab. The material of the negative electrode collector can be copper, and the negative electrode active substance can be carbon or silicon, etc. In order to ensure that a heavy current is passed without fusing, a plurality of positive tabs are provided and laminated together, and a plurality of negative tabs are provided and laminated together. The material of the separator can be PP (polypropylene) or PE (polyethylene), etc. Additionally, the electrode assembly can be a coiled structure or a laminated structure, which is not limited by the embodiments of the present disclosure.

It is to consider multiple design factors simultaneously for the development of the battery technology, such as energy density, cycle life, discharging capacity, charging/discharging rate, and other performance parameters. Additionally, the safety of the battery needs to be considered.

For general battery cells, a pressure relief area is generally arranged on the housing. When the pressure inside the battery cell reaches a threshold, the pressure relief area opens to release the pressure inside the battery cell, so as to improve the safety of the battery cell.

In order to improve the insulation performance of the battery cells, an insulator is generally wrapped outside the housing, by which the insulation between the battery cells is realized. The inventors noted that the insulator covers the pressure relief area of the housing after the insulator wraps around the housing. The insulator is not easily broken, which improves a burst pressure of the battery cell. When the battery cell undergoes thermal runaway, the pressure relief area cannot open in time under the influence of the insulator, which exists a safety hazard.

In view of this, the embodiments of the present disclosure provide a battery cell, wherein the weak part is arranged on the insulator, so that the insulator is more easily broken at the position of the weak part, which reduces the influence of the insulator on the pressure relief area and ensures a normal burst pressure of the battery cell, so that the battery cell can release pressure in time, thereby improving the safety of the battery cell.

The technical solutions described by the embodiments of the present disclosure apply to the battery, as well as the electrical device using the battery.

The electrical device can be a vehicle, cell phone, portable device, laptop, ship, spacecraft, electric toy, power tool, etc. The vehicle can be a fuel vehicle, gas vehicle, or new energy vehicle, wherein the new energy vehicle can be a pure electric vehicle, hybrid electric vehicle, or range extended vehicle, etc. The spacecraft includes an airplane, rocket, space shuttle and spaceship, etc. The electric toy includes a stationary or movable electric toy, such as a game console, electric car toy, electric boat toy, and electric airplane toys, etc. The electric tool includes a metal cutting electric tool, grinding electric tool, assembling electric tool, and electric tool for a railroad, such as an electric drill, electric sander, electric wrench, electric screwdriver, electric hammer, electric drill, concrete vibrator, and electric planer, etc. The embodiments of the present disclosure do not provide any special limitations for the foregoing electrical device.

For the sake of illustration, the following embodiments take the vehicle as an example of electrical device.

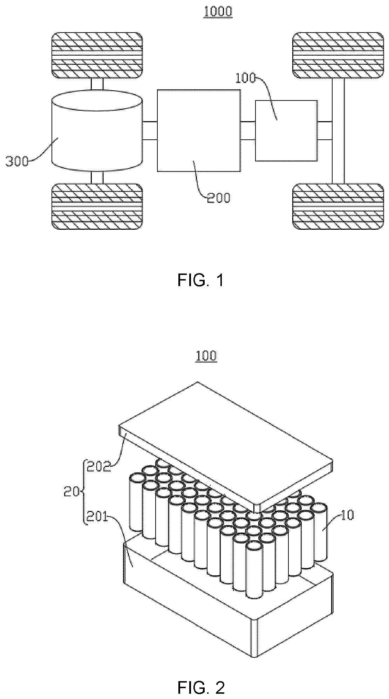

Referring to FIG. 1, FIG. 1 shows a structure schematic diagram of the vehicle 1000 provided by some embodiments of the present disclosure. The battery 100 is arranged inside the vehicle 1000, and the battery 100 can be arranged at the bottom or head or tail of the vehicle 1000. The battery 100 can be configured to supply power to the vehicle 1000, e.g., the battery 100 can be configured as an operating power supply of the vehicle 1000.

The vehicle 1000 can further include a controller 200 and a motor 300, wherein the controller 200 is configured to control the battery 100 to supply power to the motor 300, for example, which is configured to meet an electricity demand of the vehicle 1000 when starting, navigating, and travelling.

In some embodiments of the present disclosure, the battery 100 can not only be configured as the operating power supply of the vehicle 1000, but can also be configured as a driving power supply of the vehicle 1000, which replaces or partially replaces fuel oil or natural gas to provide a driving force for the vehicle 1000.

Referring to FIG. 2, FIG. 2 shows an explosion diagram of the battery 100 provided by some embodiments of the present disclosure. The battery 100 includes a battery cell 10 and a box body 20, wherein the box body 20 is configured to accommodate the battery cell 10.

The box body 20 is a component to accommodate the battery cell 10, and the box body 20 provides an accommodating space for the battery cell 10, wherein the box body 20 can be adopted as a variety of structures. In some embodiments, the box body 20 can include a first part 201 and a second part 202, wherein the first part 201 and the second part 202 cover each other to define the accommodating space for accommodating the battery cell 10. The first part 201 and the second part 202 can be multiple shapes, such as rectangular, cylinder, etc. The first part 201 can be a hollow structure opened on one side, and the second part 202 can also be a hollow structure opened on one side. The opening side of the second part 202 is covered on the opening side of the first part 201, so that the box body 20 with the accommodating space is formed. Alternatively, the first part 201 is of the hollow structure opened on one side, and the second part 202 is of a platy structure. The second part 202 is covered on the opening side of the first part 201, so that the box body 20 with the accommodating space is formed. The first part 201 and the second part 202 can be sealed by a sealing element, wherein the sealing element can be a sealing ring, sealing glue, etc.

In the battery 100, one or a plurality of battery cells 10 can be provided. If the plurality of battery cells 10 are provided, the plurality of battery cells 10 can be connected in series or in parallel or in hybrid, wherein the hybrid connection means that the plurality of battery cells 10 are both in series connection and in parallel connection. It can be that the plurality of battery cells 10 are firstly connected in series or in parallel or in hybrid to form a battery module, and the plurality of battery modules are then connected in series or in parallel or in hybrid to form a whole, and are accommodated in the box body 20. It can also be that all the battery cells 10 are directly connected together in series or in parallel or in hybrid, and then the whole consisted of all the battery cells 10 is accommodated in the box body 20.

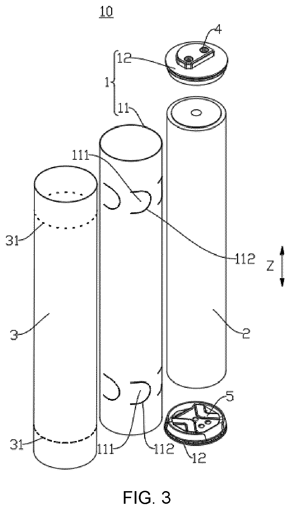

Referring to FIG. 3, FIG. 3 shows an explosion diagram of the battery cell 10 provided by some embodiments of the present disclosure. The battery cell 10 can include a housing 1, an electrode assembly 2, and an insulator 3.

The housing 1 is configured to accommodate the electrode assembly 2, the electrolyte, and other components, wherein the housing 1 can include a housing body 11 and an end cover 12. The end cover 12 closes the opening of the housing body 11, and the end cover 12 and the housing body 11 together define the sealing space. The sealing space is configured to accommodate the electrode assembly 2, the electrolyte, and other components.

The housing body 11 can be a hollow structure with an opening formed at one end, and the housing body 11 can be the hollow structure with openings formed at opposite ends. The housing body 11 can be multiple shapes, e.g., cylindrical, rectangular, etc. The housing body 11 can be made of a variety of materials, e.g., copper, iron, aluminum, steel, aluminum alloy, etc.

The end cover 12 is a component to cover the opening of the housing body 11, so as to isolate the internal environment of the battery cell 10 from the external environment. The shape of the end cover 12 can be adapted to the shape of the housing body 11. For example, the housing body 11 is a rectangular structure, and the end cover 12 is a rectangular platy structure adapted to the housing body 11. For example, as shown in FIG. 3, the housing body 11 is a cylindrical structure, and the end cover 12 is a circular platy structure adapted to the housing body 11. The end cover 12 can be made of a variety of materials, e.g., copper, iron, aluminum, steel, aluminum alloy, etc. The material of the end cover 12 can be the same as or different from the material of the housing body 11.

In the housing 1, the end cover 12 can be provided with a number of one or two. For example, the housing body 11 is of the hollow structure with an opening at one end, and one end cover 12 can be provided correspondingly. For example, as shown in FIG. 3, the housing body 11 is of the hollow structure with openings formed at opposite ends, and two end covers 12 can be provided correspondingly.

The electrode assembly 2 is the component in the battery cell 10 where the electrochemical reaction occurs. The electrode assembly 2 can include the positive electrode plate, the negative electrode plate, and the separator. The electrode assembly 2 can be a coiled structure formed by winding the positive electrode plate, the separator, and the negative electrode plate, or a laminated structure formed by layering the positive electrode plate, the separator, and the negative electrode plate. The electrode assembly 2 is provided with the positive tab and the negative tab, wherein the positive tab can be the part of the positive electrode plate not coated with the positive electrode active substance layer, and the negative tab can be the part of the negative electrode plate not coated with the negative electrode active substance layer.

The battery cell 10 can be provided with electrode terminals 4, wherein the electrode terminals 4 are the components in the battery cell 10 for connecting with an external component (such as the busbar component), so as to output electrical energy of the battery cell 10. The electrode terminals 4 are mounted on the end covers 12. As shown in FIG. 3, in the case that the housing body 11 is of the hollow structure with openings at two ends, the electrode terminals 4 can be arranged on two end covers 12. The electrode terminal 4 on the end cover 12 is connected to the positive tab of the electrode assembly 2 by the current collecting member 5, and the electrode terminal 4 on the other end cover 12 is connected to the negative tab of the electrode terminal 4 by the other current collecting member 5.

The insulator 3 is a component with the insulating property wrapping around the housing 1. The insulator 3 is made of the insulating material, e.g., plastic, rubber, etc. The insulator 3 can be the insulating membrane wrapping around the outside of the housing 1, e.g., a blue membrane. Specifically, the insulator 3 wraps around the outside of the housing body 11 of the housing 1.

Referring to FIG. 3, the embodiments of the present disclosure provide a battery cell 10, which includes the housing 1 and the insulator 3, wherein the housing 1 is provided with a pressure relief area 111, and the pressure relief area 111 is configured to release pressure inside the battery cell 10. The insulator 3 wraps around the housing 1 and covers the pressure relief area 111, wherein the insulator 3 is provided with the weak part 31, and the weak part 31 is configured to be broken when the pressure relief area 111 opens.

The pressure relief area 111 is an area of the housing 1 that can open to release pressure inside the battery cell 10, and the pressure relief area 111 can be formed on the housing body 11 of the housing 1. One or more pressure relief areas 111 on the housing 1 can be provided. The pressure relief area 111 can open in multiple ways, e.g., broken, detached, flipped, etc. The pressure relief area 111 can be formed in multiple ways, in case of providing a groove on the housing body 11, it can be that the area defined by the groove side surface of the groove is the pressure relief area 111; or it can be that the groove extends along a curved trajectory, wherein the groove is located at an edge position of the pressure relief area 111, and the pressure relief area 111 is enclosed by the groove.

The insulator 3 can wrap around the housing body 11 of the housing 1, wherein the insulator 3 is of the same shape as the housing body 11. Exemplarily, in FIG. 3, both the insulator 3 and the housing body 11 are cylindrical. The insulator 3 can be directly connected to the housing 1; and the insulator 3 can also be indirectly connected to the housing 1, e.g., the insulator 3 is adhered to the housing 1.

The weak part 31 is a part of the insulator 3 that is weakened, wherein the strength of the weak part 31 is smaller than the strength of the other parts of the insulator 3. When the pressure relief area 111 opens to release pressure, the weak part 31 is more easily broken than other parts of the insulator 3. The weak part 31 can be formed in multiple ways. For example, the insulator 3 is provided with a linear groove, and the weak part 31 is correspondingly formed at the position of the insulator 3 provided with the linear groove. For another example, the insulator 3 is provided with a broken line, and the weak part 31 is correspondingly formed at the position of the insulator 3 provided with the broken line. The weak part 31 can be broken in multiple ways. For example, the weak part 31 is broken by emissions inside the battery cell 10. For another example, the weak part 31 is broken by the force during the process of opening the pressure relief area 111.

In the embodiment of the present disclosure, the insulator 3 is provided with the weak part 31, so that the insulator 3 is easily broken at the position of the weak part 31, which reduces the influence of the insulator 3 on the pressure relief area 111 and ensures the normal burst pressure of the battery cell 10, so that the battery cell 10 can release pressure in time, thereby improving the safety of the battery cell 10.

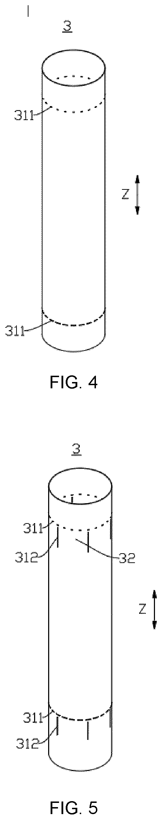

In some embodiments, referring to FIG. 4, FIG. 4 shows a structure schematic diagram of the insulator 3 shown in FIG. 3. The weak part 31 includes a first weak part 311, wherein the first weak part 311 is arranged around the insulator 3 along the circumference of the housing 1.

The circumference of the housing 1 is consistent with the circumference of the insulator 3. It can be that the linear groove is arranged on the insulator 3 to form the first weak part 311 correspondingly. As shown in FIG. 4, it can be that the broken line is arranged on the insulator 3 to form the first weak part 311 correspondingly.

The insulator 3 can be provided with one first weak part 311, or can be provided with a plurality of first weak parts 311. Exemplarily, in combination with FIG. 3 and FIG. 4, the insulator 3 is provided with two first weak parts 311, wherein two first weak parts 311 are arranged at intervals along an axial direction of the insulator 3. The housing 1 is provided with two groups of pressure relief areas 111, wherein each group of the pressure relief areas 111 includes a plurality of pressure relief areas 111. The plurality of pressure relief areas 111 are arranged at intervals on the housing 1 along the circumference of the housing 1, wherein each group of the pressure relief areas 111 is provided with one first weak part 311 correspondingly.

During the process of opening the pressure relief area 111, the first weak part 311 can be cracked along the circumference of the housing 1, so that the insulator 3 can be broken at the position of the first weak part 311, so as to reduce the influence of the insulator 3 on the pressure relief area 111.

In some embodiments, referring to FIG. 5, FIG. 5 shows a structure schematic diagram of the insulator 3 provided by some embodiments of the present disclosure. The weak part 31 includes a second weak part 312, wherein the second weak part 312 extends along the extension direction of the housing 1, and one first weak part 311 is provided with at least one second weak part 312 correspondingly.

The extension direction of the housing 1 is a height direction of the housing 1. In the case that the housing body 11 of the housing 1 is cylindrical, the extension direction of the housing 1 is the axial direction of the housing 1, as well as the axial direction of the insulator 3. In FIG. 5, the Z direction is the extension direction of the housing 1. The second weak part 312 may or maynot be in contact with the first weak part 311. Exemplarily, in FIG. 5, the second weak part 312 is not in contact with the first weak part 311, and the second weak part 312 is arranged at intervals with the first weak part 311 along the extension direction of the housing 1. The distance between the second weak part 312 and the first weak part 311 is less than 5 mm.

One first weak part 311 can be correspondingly provided with one second weak part 312, and can also be correspondingly provided with a plurality of second weak parts 312. It can be that the broken line is arranged on the insulator 3 to form the second weak part 312 correspondingly. As shown in FIG. 5, it can be that the linear groove is arranged on the insulator 3 to form the second weak part 312 correspondingly.

The insulator 3 can be cracked not only at the position of the first weak part 311, but also at the position of the second weak part 312, which further reduces the influence of the insulator 3 on the pressure relief area 111.

In some embodiments, referring to FIG. 5, one first weak part 311 is provided with a plurality of second weak parts 312 correspondingly, wherein the plurality of second weak parts 312 are arranged at intervals along the circumference of the housing 1, and the housing 1 is provided with a pressure relief area 111 correspondingly between two adjacent second weak parts 312.

In this embodiment, one first weak part 311 is provided with the plurality of second weak parts 312 correspondingly, wherein the plurality of second weak parts 312 are arranged at intervals along the extension direction of the first weak part 311. The plurality of second weak parts 312 can be evenly distributed along the extension direction of the first weak part 311. An opening area 32 is formed by the insulator 3 between two adjacent second weak parts 312, wherein one opening area 32 is corresponding to one pressure relief area 111. During the process of opening the pressure relief area 111, the insulator 3 is cracked along the first weak part 311 and two adjacent second weak parts 312, so as to open the opening area 32.

In this embodiment, the insulator 3 is provided with the plurality of second weak parts 312. During the process of opening the pressure relief area 111, the insulator 3 can be cracked at the positions of the plurality of second weak parts 312, so that the insulator 3 is more easily broken. The housing 1 is correspondingly provided with one pressure relief area 111 between two adjacent second weak parts 312, so that the opening area 32 of the insulator 3 located between two adjacent second weak parts 312 opens during the process of opening the pressure relief area 111, which improves the timeliness of the pressure relief of the battery cell 10.

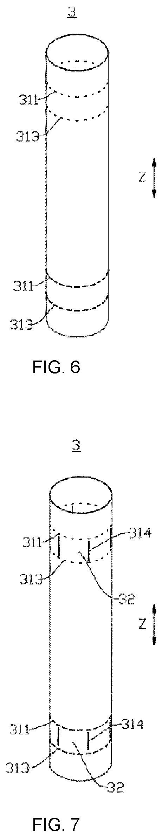

In some embodiments, referring to FIG. 6, FIG. 6 shows a structure schematic diagram of the insulator 3 provided by some other embodiments of the present disclosure. The weak part 31 includes a third weak part 313, wherein the third weak part 313 is arranged around the insulator 3 along the circumference of the housing 1. The third weak part 313 and the first weak part 311 are arranged at intervals along the extension direction of the housing 1, and the pressure relief area 111 is at least partially located between the third weak part 313 and the first weak part 311.

It can be that the linear groove is arranged on the insulator 3 to form the third weak part 313 correspondingly. As shown in FIG. 6, it can be that the broken line is arranged on the insulator 3 to form the third weak part 313 correspondingly.

The pressure relief area 111 can be arranged entirely between the third weak part 313 and the first weak part 311. The pressure relief area 111 can also be partially arranged between the third weak part 313 and the first weak part 311, for example, a part of the pressure relief area 111 is arranged between the third weak part 313 and the first weak part 311, and the other part of the pressure relief area 111 is arranged on one side of the third weak part 313 away from the first weak part 311.

The insulator 3 can be provided with one third weak part 313, or can be provided with a plurality of third weak parts 313. The third weak part 313 and the first weak part 311 are in one-to-one correspondence. Exemplarily, the insulator 3 is provided with two third weak parts 313, wherein two third weak parts 313 are arranged at intervals along the axial direction of the insulator 3. The housing 1 is provided with two groups of pressure relief areas 111. Each group of the pressure relief areas 111 includes a plurality of pressure relief areas 111, and the plurality of pressure relief areas 111 are arranged at intervals on the housing 1 along the circumference of the housing 1. Each group of the pressure relief areas 111 is corresponding to a part of the insulator 3 between the first weak part 311 and the third weak part 313.

During the process of opening the pressure relief area 111, the first weak part 311 and the third weak part 313 can be cracked along the circumference of the housing 1, so that the insulator 3 can be broken at the position of the first weak part 311 and the third weak part 313, so that the part of the insulator 3 between the first weak part 311 and the third weak part 313 is detached from the other part. The part of the insulator 3 between the first weak part 311 and the third weak part 313 is more easily broken during the process of opening the pressure relief area 111, so as to reduce the influence of the insulator 3 on the pressure relief area 111.

In some embodiments, the pressure relief area 111 is located entirely between the third weak part 313 and the first weak part 311 along the extension direction of the housing 1.

In case that the housing 1 is provided with two groups of pressure relief areas 111, the plurality of pressure relief areas 111 in each group of pressure relief areas 111 are located entirely between the third weak part 313 and the first weak part 311. It can be understood that the third weak part 313 and the first weak part 311 are separately located on two sides of each group of pressure relief areas 111 along the extension direction of the housing 1.

During the process of opening the pressure relief area 111, more parts of the pressure relief area 111 can act directly on the part of the insulator 3 located between the first weak part 311 and the third weak part 313, so that the part of the insulator 3 located between the first weak part 311 and the third weak part 313 is more easily broken.

In some embodiments, referring to FIG. 7, FIG. 7 shows a structure schematic diagram of the insulator 3 provided by some other embodiments of the present disclosure. The weak part 31 further includes a fourth weak part 314, wherein the fourth weak part 314 extends along the extension direction of the housing 1. Along the extension direction of the housing 1, the fourth weak part 314 is at least partially located between the third weak part 313 and the first weak part 311.

The fourth weak part 314 can be located entirely between the third weak part 313 and the first weak part 311; or the fourth weak part 314 can also be partially located between the third weak part 313 and the first weak part 311. For example, along the extension direction of the housing 1, one end of the fourth weak part 314 is located between the third weak part 313 and the first weak part 311, and the other end of the fourth weak part 314 extends to one side of the third weak part 313 away from the first weak part 311. For another example, along the extension direction of the housing 1, one end of the fourth weak part 314 is located between the third weak part 313 and the first weak part 311, and the other end of the fourth weak part 314 extends to one side of the first weak part 311 away from the third weak part 313.

One fourth weak part 314 can be arranged between the first weak part 311 and the third weak part 313 correspondingly, or a plurality of fourth weak parts 314 can be arranged correspondingly. The insulator 3 can be provided with the broken line to form the fourth weak part 314 correspondingly. As shown in FIG. 7, it can be that the linear groove is arranged on the insulator 3 to form the fourth weak part 314 correspondingly.

The fourth weak part 314 is arranged on the insulator 3, so that the part of the insulator 3 located between the first weak part 311 and the third weak part 313 can be cracked at the position of the fourth weak part 314, so that the part of the insulator 3 between the first weak part 311 and the third weak part 313 is more easily broken, thus further reducing the influence of the insulator 3 on the pressure relief area 111.

In some embodiments, referring to FIG. 7, the fourth weak part 314 is entirely located between the third weak part 313 and the first weak part 311 along the extension direction of the housing 1.

The fourth weak part 314 is not in contact with the third weak part 313, and the fourth weak part 314 is not in contact with the first weak part 311. Two ends of the fourth weak part 314 are at a distance from the third weak part 313 and the first weak part 311 respectively.

After the insulator 3 is cracked at the position of the fourth weak part 314, the crack can extend the first weak part 311 and the third weak part 313, so that the insulator 3 is more easily cracked along the first weak part 311 and the third weak part 313.

In some embodiments, referring to FIG. 7, the weak part 31 includes a plurality of fourth weak parts 314, wherein the plurality of fourth weak parts 314 are arranged at intervals along the circumference of the housing 1, and the housing 1 is correspondingly provided with one pressure relief area 111 between two adjacent fourth weak parts 314.

The plurality of fourth weak parts 314 are arranged between the first weak part 311 and the third weak part 313 correspondingly, wherein the plurality of fourth weak parts 314 are arranged at intervals extension first along an direction of the weak part 311 and the third weak part 313 and the plurality of fourth weak parts 314 can be evenly distributed between the first weak part 311 and the third weak part 313. The opening area 32 is formed between two adjacent fourth weak parts 314 by the insulator 3, wherein one opening area 32 is corresponding to one pressure relief area 111. During the process of opening the pressure relief area 111, the insulator 3 is cracked along the first weak part 311, the third weak part 313, and two adjacent fourth weak parts 314, so as to open the opening area 32.

During the opening process of the pressure relief region 111, with the gradual cracking of the fourth weak part 314, the first weak part 311, and the third weak part 313, the part of the insulator 3 located between two adjacent fourth weak parts 314 can be detached ultimately. The pressure relief area 111 can open more easily, and can open in larger areas, which improves the timeliness of pressure relief.

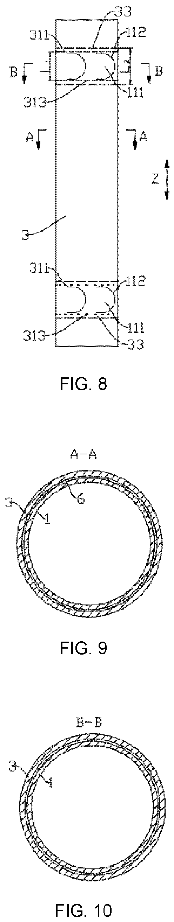

In some embodiments, referring to FIG. 8-FIG. 10, FIG. 8 shows an assembly diagram of the insulating layer and the housing 1 provided by some embodiments of the present disclosure; FIG. 9 is an A-A sectional diagram shown in FIG. 8; and FIG. 10 is a B-B sectional diagram shown in FIG. 8. The battery cell 10 further includes the adhesive layer 6, wherein the adhesive layer 6 connects the insulator 3 and the housing 1. The insulator 3 is provided with a blank area 33 without the adhesive layer 6, and the first weak part 311 and the third weak part 313 are arranged on the blank area 33.

The adhesive layer 6 can be an adhesive layer arranged between the insulator 3 and the housing body 11 of the housing 1. The blank area 33 can be an annular area where the insulator 3 is not provided with the adhesive layer 6. One or more of the blank areas 33 of the insulator 3 can be provided. Exemplarily, the insulator 3 is provided with two blank areas 33, wherein two blank areas 33 are arranged at intervals along the extension direction of the housing 1. The first weak parts 311 and the third weak parts 313 are both in two, wherein one first weak part 311 and one third weak part 313 are provided on one blank area 33, and the other first weak part 311 and the other third weak part 313 are provided on the other blank area 33. Exemplarily, in FIG. 8, the pressure relief area 111 is located entirely between the first weak part 311 and the third weak part 313 along the extension direction of the housing 1.

In this embodiment, the insulator 3 may be provided with the fourth weak part 314 located between the first weak part 311 and the third weak part 313, or may not be provided with the fourth weak part 314.

The insulator 3 is connected to the housing 1 by the adhesive layer 6 to ensure that the insulator 3 is not easily detached from the housing 1 during normal use of the battery cell 10. The first weak part 311 and the third weak part 313 are arranged on the blank area 33 to reduce the influence of the adhesive layer 6 on the first weak part 311 and the third weak part 313, so that the first weak part 311 and the third weak part 313 are more easily cracked. Additionally, since the blank area 33 is not provided with the adhesive layer 6, the part of the insulator 3 located between the first weak part 311 and the third weak part 313 is more easily broken during the process of outwards opening the pressure relief area 111.

In some embodiments, referring to FIG. 8, along the extension direction of the housing 1, a distance between the first weak part 311 and the third weak part 313 is L₁, and a width of the blank area 33 is L₂, satisfying: L₁ ≤ L₂, so that the part of the insulator 3 located between the first weak part 311 and the third weak part 313 is entirely located within the blank area 33.

Exemplarily, in FIG. 8, L₁ < L₂.

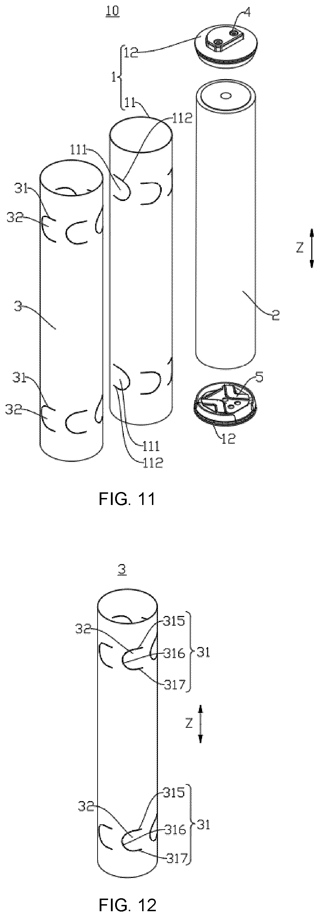

In some embodiments, referring to FIG. 11, FIG. 11 shows an explosion diagram of the battery cell 10 provided by some other embodiments of the present disclosure. The insulator 3 is provided with the opening area 32, wherein the weak part 31 is arranged along the edge of the opening area 32, and the opening area 32 covers at least a part of the pressure relief area 111.

The opening area 32 is the part of the insulator 3 that can be opened. The shape of the opening area 32 and the shape of the pressure relief area 111 can be the same or different. The opening area 32 can cover a part of the pressure relief area 111, or can completely cover the pressure relief area 111. One or a plurality of opening areas 32 on the insulator 3 can be provided. The opening area 32 and the pressure relief area 111 can be one-to-one correspondence, or one opening area 32 can be provided with multiple pressure relief areas 111 correspondingly.

The weak part 31 can extend along a closed trajectory to define a closed opening area 32, for example, the weak part 31 extends along the trajectory such as a circle, ellipse, or rectangle, etc. The weak part 31 can extend along a non-closed trajectory to define a non-closed opening area 32, for example, the weak part 31 extends along the trajectory such as a U-shape, a C-shape, etc.

During the process of opening the pressure relief area 111, the opening area 32 of the insulator 3 can open with the weak part 31 as the boundary, which reduces the influence of the insulator 3 on the pressure relief area 111 and can realize the pressure relief of the large area.

In some embodiments, referring to FIG. 11, the plurality of pressure relief areas 111 are arranged at intervals on the housing 1 along the circumference of the housing 1, wherein one pressure relief area 111 is provided with one opening area 32 correspondingly.

Exemplarily, in FIG. 11, the housing 1 is provided with two groups of pressure relief areas 111, wherein the two groups of pressure relief areas 111 are arranged at intervals along the extension direction of the housing 1. Each group of the pressure relief areas 111 includes the plurality of pressure relief areas 111, and the plurality of pressure relief areas 111 are arranged at intervals along the circumference of the housing 1. The insulator 3 is provided with two groups of opening areas 32, wherein each group of opening areas 32 includes the plurality of opening areas 32, and the plurality of opening areas 32 are arranged at intervals along the circumference of the housing 1. The opening areas 32 in each group of opening areas 32 and the pressure relief areas 111 in each group of pressure relief areas 111 are in one-to-one correspondence.

Each of the opening areas 32 can open during the process of opening the corresponding pressure relief area 111, so that each of the pressure relief areas 111 on the housing 1 can open smoothly.

In some embodiments, referring to FIG. 12, FIG. 12 shows a structure schematic diagram of the insulator 3 shown in FIG. 11. The weak part 31 includes a fifth weak part 315, a sixth weak part 316, and a seventh weak part 317 connected in sequence, wherein the fifth weak part 315 is arranged opposite to the seventh weak part 317, and the sixth weak part 316 connects the fifth weak part 315 and the seventh weak part 317, wherein the fifth weak part 315, the sixth weak part 316, and the seventh weak part 317 define the opening area 32 together.

The fifth weak part 315, the sixth weak part 316, and the seventh weak part 317 can all be formed by providing the linear groove or broken line on the insulator 3. The fifth weak part 315, the sixth weak part 316, and the seventh weak part 317 extend along the non-closed trajectory as a whole, and the fifth weak part 315, the sixth weak part 316, and the seventh weak part 317 define the non-closed opening area 32.

Exemplarily, as shown in FIG. 12, the fifth weak part 315, the sixth weak part 316, and the seventh weak part 317 are connected in sequence and form a U-shaped structure. The fifth weak part 315 is arranged opposite to the seventh weak part 317 along the extension direction of the housing 1, wherein the sixth weak part 316 is in arc shape, and both the fifth weak part 315 and the seventh weak part 317 are tangent to the sixth weak part 316.

In this embodiment, the opening area 32 can open in an outwardly flipped manner after the sixth weak part 316, the fifth weak part 315, and the seventh weak part 317 are cracked. The open opening area 32 is not detached from the other parts of the insulator 3, which reduces the risk of detachment and splashing of the opening area 32 during the process of opening the pressure relief area 111.

In some embodiments, the battery cell 10 further includes the adhesive layer 6, wherein the adhesive layer 6 connects the insulator 3 and the housing 1.

The adhesive layer 6 can be an adhesive layer arranged between the insulator 3 and the housing body 11 of the housing 1.

It is noted that in any of the embodiments shown in FIG. 3-FIG 12, both the insulator 3 and the housing 1 can be connected by the adhesive layer 6.

The insulator 3 is connected to the housing 1 by the adhesive layer 6 to ensure that the insulator 3 is not easily detached from the housing 1 during normal use of the battery cell 10.

In some embodiments, the insulator 3 is provided with the blank area 33 without the adhesive layer 6, wherein the weak part 31 is arranged on the blank area 33, and the blank area 33 covers at least a part of the pressure relief area 111.

The blank area 33 can be an annular area where the insulator 3 is not provided with the adhesive layer 6. One or more of the blank areas 33 of the insulator 3 can be provided. The blank area 33 can cover a part of the pressure relief area 111, or can completely cover the pressure relief area 111.

It is noted that in any of the embodiments shown in FIG. 3-FIG 12, the insulator 3 can all be provided with the blank area 33. For example, in the embodiments shown in FIG. 3 and FIG. 4, the first weak part 311 can be arranged on the blank area 33. In the embodiment shown in FIG. 5, both the first weak part 311 and the second weak part 312 can be arranged on the blank area 33. In the embodiment shown in FIG. 6, the first weak part 311 and the third weak part 313 can both be arranged on the blank area 33. In the embodiment shown in FIG. 7, the first weak part 311, the third weak part 313, and the fourth weak part 314 can all be arranged on the blank area 33. In the embodiments shown in FIG. 11-FIG. 12, the fifth weak part 315, the sixth weak part 316, and the seventh weak part 317 can all be arranged on the blank area 33.

Since the blank area 33 of the insulator 3 is not provided with the adhesive layer 6, the blank area 33 is more easily broken during the process of outwards opening the pressure relief area 111.

In some embodiments, the blank area 33 completely covers the pressure relief area 111.

Taking the embodiment shown in FIG. 8 as an example, the pressure relief area 111 is completely located between the first weak part 311 and the third weak part 313, wherein the first weak part 311 and the third weak part 313 are arranged on the blank area 33. In this way, the blank area 33 can be realized to completely cover the pressure relief area 111.

In this embodiment, the blank area 33 completely covers the pressure relief area 111. More parts of the relief area 111 can act directly on the blank area 33 during the opening process of the pressure relief area 111, so that the blank area 33 is more easily broken.

In some embodiments, the insulator 3 is provided with the broken line, wherein the weak part 31 is formed by the insulator 3 at the position where the broken line is arranged.

For example, in the embodiment shown in FIG. 3 and FIG. 4, the first weak part 311 can be formed by providing the broken line on the insulator 3. In the embodiment shown in FIG. 5, both the first weak part 311 and the second weak part 312 can be formed by providing the broken line on the insulator 3. In the embodiment shown in FIG. 6, both the first weak part 311 and the third weak part 313 can be formed by providing the broken line on the insulator 3. In the embodiment shown in FIG. 7, the first weak part 311, the third weak part 313, and the fourth weak part 314 can all be formed by providing the broken line on the insulator 3. In the embodiments shown in FIG. 11-FIG. 12, the fifth weak part 315, the sixth weak part 316, and the seventh weak part 317 can all be formed by providing the broken line on the insulator 3.

After the insulator 3 is provided with the broken line, a localized weakening treatment of the insulator 3 is realized, so that the insulator 3 is more easily broken than other areas at the position where the broken line is arranged, so that the weak part 31 that is more easily broken than other areas is formed. The weak part 31 is formed by providing the broken line on the insulator 3. On the one hand, it can ensure that the insulator 3 has sufficient strength at the position where the broken line is arranged during normal use; on the other hand, the insulator 3 can be cracked along the broken line during the process of opening the pressure relief area 111.

In some embodiments, the broken line includes a plurality of grooves arranged at intervals along its extension trajectory, wherein the grooves are arranged on an outer surface or inner surface of the insulator 3. In this way, the insulating property of the insulator 3 can be ensured.

In some embodiments, the broken line includes a plurality of through holes arranged at intervals along its extension trajectory, wherein the through holes pass through the outer surface and inner surface of the insulator 3. In this way, the insulator 3 is more easily cracked along the position of the broken line during the process of opening the pressure relief area 111.

In some embodiments, the insulator 3 is provided with the linear groove, wherein the weak part 31 is formed on the insulator 3 at the position provided with the linear groove.

For example, in the embodiment shown in FIG. 3 and FIG. 4, the first weak part 311 can be formed by providing the linear groove on the insulator 3. In the embodiment shown in FIG. 5, both the first weak part 311 and the second weak part 312 can be formed by providing the linear groove on the insulator 3. In the embodiment shown in FIG. 6, both the first weak part 311 and the third weak part 313 can be formed by providing the linear groove on the insulator 3. In the embodiment shown in FIG. 7, the first weak part 311, the third weak part 313, and the fourth weak part 314 can all be formed by providing the linear groove on the insulator 3. In the embodiments shown in FIG. 11-FIG. 12, the fifth weak part 315, the sixth weak part 316, and the seventh weak part 317 can all be formed by providing the linear groove on the insulator 3.

The linear grooves can be of multiple shapes, such as straight linear groove, curved linear groove, etc.

In this embodiment, the structure of forming the weak part 31 by providing the linear groove on the insulator 3 is simpler.

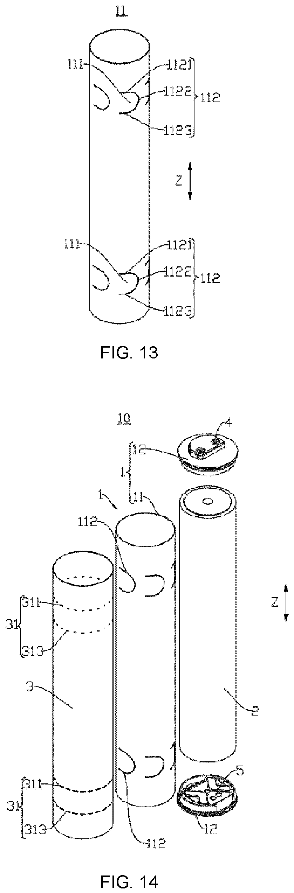

In some embodiments, referring to FIG. 13, FIG. 13 shows a structure schematic diagram of the housing body 11 of the housing 1 provided by some embodiments of the present disclosure. The housing 1 is provided with the plurality of pressure relief areas 111, wherein the plurality of pressure relief areas 111 are arranged at intervals along the circumference of the housing 1.

The pressure relief areas 111 are arranged on the housing body 11 of the housing 1. Exemplarily, the plurality of groups of the pressure relief areas 111 are arranged on the housing body 11 of the housing 1, and the plurality of groups of pressure relief areas 111 are arranged at intervals along the extension direction of the housing 1. Each group of the pressure relief areas 111 includes a plurality of pressure relief areas 111, and the plurality of pressure relief areas 111 are arranged at intervals on the housing 1 along the circumference of the housing 1. In the embodiment illustrated in FIG. 13, the housing body 11 of the housing 1 is provided with two groups of pressure relief areas 111.

The housing 1 can release pressure by the plurality of pressure relief areas 111 to increase the pressure relief capacity of the housing 1.

In some embodiments, referring to FIG. 13, the housing 1 is provided with the notch groove 112, wherein the notch groove 112 is arranged along the edge of the pressure relief area 111.

The notch groove 112 is arranged on the housing body 11 of the housing 1. The notch groove 112 can be arranged on the inner surface of the housing body 11 or on the outer surface of the housing body 11. The notch groove 112 can extend along the closed trajectory to define the closed pressure relief area 111. For example, the notch groove 112 extends along the trajectory such as the circle, ellipse, or rectangle, etc. The notch groove 112 can also extend along the non-closed trajectory to define the non-closed pressure relief area 111, for example, the notch groove 112 extends along the trajectory such as the U-shape, the C-shape, etc.

The housing 1 is weaker at the position where the notch groove 112 is arranged. When the internal pressure of the housing 1 reaches the threshold, the pressure relief area 111 will open with the notch groove 112 as the boundary, so as to realize the pressure relief of large areas and improve the pressure relief efficiency.

In some embodiments, referring to FIG. 13, the notch groove 112 includes a first groove section 1121, a second groove section 1122, and a third groove section 1123, wherein the first groove section 1121 is arranged opposite to the third groove section 1123; the second groove section 1122 connects the first groove section 1121 and the third groove section 1123; and the first groove section 1121, the second groove section 1122, and the third groove section 1123 together define the pressure relief area 111.

Exemplarily, the first groove section 1121, the second groove section 1122, and the third groove section 1123 are connected in sequence and form a U-shaped structure. The first groove section 1121 and the third groove section 1123 are arranged opposite each other along the extension direction of the housing 1. The second groove section 1122 is in arc shape, and both the first groove section 1121 and the third groove section 1123 are tangent to the second groove section 1122.

The pressure relief area 111 can open in an outwards flipped manner after the second groove section 1122, the first groove section 1121, and the third groove section 1123 are cracked. The open pressure relief area 111 is not detached from the other parts of the housing 1, which reduces the risk of detachment and splashing during the process of opening the pressure relief area 111.

In some embodiments, referring to FIG. 14, FIG. 14 shows an explosion diagram of the battery cell 10 provided by some other embodiments of the present disclosure. The housing 1 includes the housing body 11 and the end cover 12, wherein the housing body 11 is provided with the opening, and the end cover 12 closes the opening. The pressure relief area 111 is formed on the housing body 11, and the insulator 3 wraps around the housing body 11 along the circumference of the opening.

Exemplarily, the housing body 11 is cylindrical. Along the axial direction of the housing body 11, two ends of the housing body 11 are provided with openings, that is, the housing body 11 is of a hollow structure with openings formed at two ends. The housing 1 includes two ends covers 12, wherein two ends cover 12 close the two openings of the housing body 11 respectively.

The embodiments of the present disclosure provide a battery 100, including the battery cell 10 provided in any of the above embodiments.

The embodiments of the present disclosure further provide an electrical device, including the battery 100 provided in any of the above embodiments.

Additionally, referring to FIG. 14, the embodiments of the present disclosure provide a cylindrical battery 100, including the housing 1, the electrode assembly 2, and the insulator 3, wherein the electrode assembly 2 is arranged in the housing 1. The housing 1 includes the housing body 11 and two end covers 12, wherein the housing body 11 is cylindrical. Along the axial direction of the housing body 11, openings are formed at two ends of the housing body 11, and the two end covers 12 close the two openings of the housing body 11 respectively. The end covers 12 are provided with electrode terminals 4. The electrode terminal 4 on one end cover 12 is connected to a positive tab of the electrode assembly 2 by a current collecting member 5, and the electrode terminal 4 on the other end cover 12 is connected to a negative tab of the electrode terminal 2 by the other current collecting member 5.

The housing body 11 is provided with two groups of pressure relief areas 111, wherein two groups of pressure relief areas 111 are arranged at intervals along the axial direction of the housing body 11. Each group of pressure relief areas 111 includes the plurality of pressure relief areas 111 arranged at intervals along the circumference of the housing body 11. The housing body 11 is provided with the notch groove 112, wherein the notch groove 112 is arranged along the edge of the pressure relief area 111; the notch groove 112 defines the pressure relief area 111; and the notch groove 112 is U-shaped.

The insulator 3 wraps around the housing body 11, and the insulator 3 is provided with weak part 31, wherein the weak part 31 is configured to be broken when the pressure relief area 111 opens. One group of pressure relief areas 111 is provided with one group of weak parts 31 correspondingly. The weak part 31 includes the first weak part 311 and the third weak part 313, and the first weak part 311 and the third weak part 313 are both arranged around the insulator 3 along the circumference of the housing 1. Along the axial direction of the housing body 11, and the third weak part 313 and the first weak part 311 are arranged at intervals. The plurality of pressure relief areas 111 in one group of pressure relief areas 111 are arranged between the third weak part 313 and the first weak part 311.

The insulator 3 is connected to the housing 1 by the adhesive layer 6. The insulator 3 is provided with the blank area 33 (not shown in FIG. 14) without the adhesive layer 6. The first weak part 311 and the third weak part 313 are both provided on the blank area 33.

It is noted that the embodiments and features in the embodiments of the present disclosure can be combined with each other without conflict.

The above embodiments are intended only to illustrate the technical solutions of the present disclosure, and are not intended to limit the present disclosure. For those skilled in the art, the present disclosure can be made of various changes and variations. Any modifications, equivalent substitutions, improvements, etc., made within the spirit and principles of the present disclosure shall be included in the scope of protection of the present disclosure.

## Claims

1. A battery cell, comprising:
a housing, provided with at least one pressure relief area, wherein the at least one pressure relief area is configured to release a pressure inside the battery cell; and
an insulator, wrapping around the housing and covering the at least one pressure relief area, wherein
the insulator is provided with a weak part, and the weak part is configured to be broken when the at least one pressure relief area opens.

2. The battery cell according to claim 1, wherein the weak part comprises at least one first weak part, and the at least one first weak part is arranged around the insulator along a circumference of the housing.

3. The battery cell according to claim 2, wherein the weak part comprises at least one second weak part, wherein the at least one second weak part extends along an extension direction of the housing, and one of the at least one first weak part is provided with at least one second weak part correspondingly.

4. The battery cell according to claim 3, wherein one of the at least one first weak part is provided with a plurality of second weak parts of the at least one second weak part correspondingly, wherein the plurality of second weak parts are arranged at intervals along the circumference of the housing, and the housing is provided with one pressure relief area of the at least one pressure relief area correspondingly between two adjacent second weak parts of the plurality of second weak parts.

5. The battery cell according to claim 2, wherein the weak part comprises at least one third weak part, wherein the at least one third weak part is arranged around the insulator along the circumference of the housing; and the at least one third weak part and the at least one first weak part are arranged intervals along an extension direction of the housing, wherein the at least one pressure relief area is at least partially located between the at least one third weak part and the at least one first weak part.

6. The battery cell according to claim 5, wherein the at least one pressure relief area is located entirely between the at least one third weak part and the at least one first weak part along the extension direction of the housing.

7. The battery cell according to claim 5, wherein the weak part further comprises at least one fourth weak part, wherein the at least one fourth weak part extends along the extension direction of the housing; and the at least one fourth weak part is at least partially located between the at least one third weak part and the at least one first weak part along the extension direction of the housing.

8. The battery cell according to claim 7, wherein the at least one fourth weak part is entirely arranged between the at least one third weak part and the at least one first weak part along the extension direction of the housing.

9. The battery cell according to claim 7, wherein the weak part comprises a plurality of fourth weak parts of the at least one fourth weak part, wherein the plurality of fourth weak parts are arranged at intervals along the circumference of the housing, and the housing is provided with one pressure relief area of the at least one pressure relief area correspondingly between two adjacent fourth weak parts of the plurality of fourth weak parts.

10. The battery cell according to any one of claims 5-9, wherein the battery cell further comprises an adhesive layer, and the adhesive layer connects the insulator and the housing, wherein
the insulator is provided with a blank area without the adhesive layer, and the at least one first weak part and the at least one third weak part both are arranged on the blank area.

11. The battery cell according to claim 10, wherein along the extension direction of the housing, a distance between the at least one first weak part and the at least one third weak part is L₁, and a width of the blank area is L₂, satisfying: L₁≤L₂.

12. The battery cell according to claim 1, wherein the insulator is provided with at least one opening area, wherein the weak part is arranged along an edge of the at least one opening area, and the at least one opening area covers at least a part of the at least one pressure relief area.

13. The battery cell according to claim 12, wherein the housing is provided with a plurality of pressure relief areas of the at least one pressure relief area at intervals along a circumference of the housing, and one of the plurality of pressure relief areas is provided with one of the at least one opening area correspondingly.

14. The battery cell according to claim 12, wherein the weak part comprises at least one fifth weak part, at least one sixth weak part and at least one seventh weak part that are connected in sequence, wherein the at least one fifth weak part is arranged opposite to the at least one seventh weak part, and the at least one sixth weak part connects the at least one fifth weak part and the at least one seventh weak part, wherein the at least one fifth weak part, the at least one sixth weak part and the at least one seventh weak part define the at least one opening area together.

15. The battery cell according to any one of claims 1-9 and 12-14, wherein the battery cell further comprises an adhesive layer, and the adhesive layer connects the insulator and the housing.

16. The battery cell according to claim 15, wherein the insulator is provided with a blank area without the adhesive layer, wherein the weak part is arranged on the blank area, and the blank area covers at least a part of the at least one pressure relief area.

17. The battery cell according to claim 16, wherein the blank area completely covers the at least one pressure relief area.

18. The battery cell according to any one of claims 1-17, wherein the insulator is provided with at least one broken line, and the weak part is formed by the insulator at a position where the at least one broken line is provided.

19. The battery cell according to claim 18, wherein the at least one broken line comprises a plurality of grooves arranged at intervals along an extension trajectory of the at least one broken line, wherein the plurality of grooves are arranged on an outer surface or an inner surface of the insulator.

20. The battery cell according to claim 18, wherein the at least one broken line comprises a plurality of through holes arranged at intervals along an extension trajectory of the at least one broken line, wherein the plurality of through holes pass through an outer surface and an inner surface of the insulator.

21. The battery cell according to any one of claims 1-17, wherein the insulator is provided with at least one linear groove, wherein the weak part is formed by the insulator at a position where the at least one linear groove is provided.

22. The battery cell according to any one of claims 1-21, wherein the housing is provided with a plurality of pressure relief areas of the at least one pressure relief area, wherein the plurality of pressure relief areas are arranged at intervals along a circumference of the housing.

23. The battery cell according to any one of claims 1-22, wherein the housing is provided with at least one notch groove, wherein the at least one notch groove is arranged along an edge of the at least one pressure relief area.

24. The battery cell according to claim 23, wherein each of the at least one notch groove comprises a first groove section, a second groove section, and a third groove section, wherein the first groove section is arranged opposite to the third groove section; the second groove section connects the first groove section and the third groove section; and the first groove section, the second groove section, and the third groove section together define the at least one pressure relief area.

25. The battery cell according to any one of claims 1-24, wherein the housing comprises a housing body and an end cover, wherein the housing is provided with an opening, and the end cover closes the opening; and
the at least one pressure relief area is formed on the housing, and the insulator wraps around the housing along a circumference of the opening.

26. A battery, comprising the battery cell according to any one of claims 1-25.

27. An electrical device, comprising the battery according to claim 26.
